# EUROPÄISCHE PATENTSCHRIFT

(11) **EP 1 285 485 B1**
(45) Veröffentlichungstag und Bekanntmachung des Hinweises auf die Patenterteilung: **06.10.2004**
(21) Anmeldenummer: 01944919.8
(22) Anmeldetag: 09.05.2001
(51) Int. Cl.: H02K 5/22

(54) **ELEKTROMOTOR, INSBESONDERE KOMMUTATORMOTOR**
ELECTROMOTOR, IN PARTICULAR A COMMUTATOR MOTOR
MOTEUR ELECTRIQUE, NOTAMMENT MOTEUR A COLLECTEUR

(30) Priorität: 22.05.2000 DE 10025272; 13.10.2000 DE 20017576 U
(43) Veröffentlichungstag der Anmeldung: 26.02.2003
(73) Patentinhaber: Siemens Aktiengesellschaft, 80333 München (DE)
(72) Erfinder: DREXLMAIER, Thomas, 97072 Würzburg (DE)
(86) Internationale Anmeldenummer: PCT/DE2001/001758
(87) Internationale Veröffentlichungsnummer: WO 2001/091268

(56) Entgegenhaltungen:
- EP-A- 0 504 469
- EP-A- 0 600 272
- EP-A- 0 708 519
- DE-A- 3 434 429

## Beschreibung

Die Erfindung bezieht sich auf einen Elektromotor, insbesondere Kommutatormotor, gemäß Patentanspruch 1; ein funkentstörter Kommutator-Motor, insbesondere zum Antrieb von Kraftfahrzeug-Hilfsantrieben, mit dem ersten Merkmal des Patentanspruchs 1 ist z.B. durch die DE 34 34 429 C2 bzw. durch die EP 0 708 519 B1 bekannt.

In den vorgenannten bekannten Fällen sind in dem an einem Lagerbügel eines Kraftfahrzeuglüftermotors fixierten Zwischenklemmbrett die Anschlussenden äußerer Anschlussleitungen sowie die Anschlussenden gesonderter zu Entstördrosseln und Bürsten führender Zwischenleitungen zusammen mit Kontaktierungspins eines Entstörkondensators in im Zwischenklemmbrett gehaltene Aderendhülsen eingesteckt und durch deren Verquetschen bzw. Vercrimpen miteinander zugentlastet gehalten und miteinander elektrisch kontaktiert; das derart als Vormontageeinheit bestückbare Zwischenklemmbrett kann bei der Motoren-Fertigung auf einfache Weise durch Verrasten an dem Elektromotor fixiert werden. Zur Verbindung mit einem Massenanschluss, insbesondere einem Motorgehäuseteil, führt eine Masseleitung aus dem Zwischenklemmbrett heraus und ist bei dessen motorseitiger Montage mit einem Kontaktierungsbereich gegen ein elektrisch leitendes Motorgehäuseteil angedrückt.

Bei einem durch die DE 197 21 316 C1 bekannten funkentstörten Kommutator-Elektromotor zum Antrieb eines Kraftfahrzeug-Gebläses ohne Zwischenklemmbrett ist ein Entstörkondensator entsprechend der Länge der äußeren Anschlussleitungen entfernt vom Elektromotor in einer kundenseitigen Anschlusseinheit mit den motorabgewandten Enden der Anschlussleitung kontaktiert; die Anschlussleitungen sind mit ihren anderen Enden unmittelbar mit den motorseitigen Entstördrosseln bzw. mit den Kommutator beschleifenden Bürsten kontaktiert.

Durch die EP 0 600 272 A1 ist ein Elektromotor mit einem außen am Motorgehäuse angeordneten steckergehäuse bekannt, das mit mehreren Anschlusslitzen verbunden ist; die außen am Motorgehäuse verlaufenden Anschlusslitzen werden von einem Litzenschutzelement dadurch aufgenommen, dass ein Anschlusslitz zwischen einem Bodengehäuse und einem damit verrastbaren Deckel festklemmbar und dadurch auch in seiner Lage fixierbar ist.

Gemäß Aufgabe vorliegender Erfindung soll bei weitgehender Auslegungsfreiheit hinsichtlich eines kundenspezifischen Anschlusses der Fertigungs- bzw. Montageaufwand zum zugentlasteten elektrischen Anschluss des Elektromotors an äußere Motor-Anschlussleitungen und ein Funkentstörbauteil verringert werden.

Die Lösung dieser Aufgabe gelingt durch einen Elektromotor, insbesondere Kommutatormotor, gemäß Patentanspruch 1. In dieser Weise sind durch einfaches Einlegen der äußeren Motor-Anschlussleitungen bzw. der Zwischenleitungen zwischen die Zwischenklemmbrett-Teile und deren anschließendes fixierbares Zusammendrücken die Leitungen durch Klemmschluss bei gleichzeitig weitgehender Handhabungs- bzw. Auslegungfreiheit der äußeren Anschlussleitungen im Sinne von gegebenenfalls auch unterschiedlich langen "Flying-Leads"zugentlastet gesichert und gleichzeitig zusätzlich eine einfache Kontaktierung mit einem Funktentstörbauteil möglich.Vorteilhafte Ausgestaltungen der Erfindung sind Gegenstand der Unteransprüche.

Zur weiteren Montage- und Fertigungsvereinfachung ist nach einer Ausgestaltung der Erfindung jeweils eine Anschlussleitung und eine anschliessende zugehörige Zwischenleitung zu einem einstückigen Leitungsteil zusammengefasst, das lediglich im Bereich der Klemmkontaktierung mit dem Funkentstörbauteil einen Kontaktierungsbereich aufweist, in dem die ansonsten die Leitung umgebende Isolierung zuvor entfernt bzw. nicht vorgesehen ist.

Zur weiteren Minderung des Herstellungsaufwandes ist in vorteilhafter Weise das Zwischenklemmbrett aus einem ersten, insbesondere einem Oberteil, und einem damit vorzugsweise durch Rastklemmung, verbindbaren zweiten, insbesondere einem Unterteil, ausgebildet und eines der beiden Bauteile im Sinne einer Vormontage- bzw. Vorfixierungsaufnahme der miteinander zu kontaktierenden Bauteile und das zweite Bauteil, insbesondere das Unterteil, im Sinne einer Endfixierung der zuvor in das andere Teil eingelegten Bauteile nach dem Zusammendrücken der beiden Zwischenklemmbrett-Teile ausgebildet.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: in einer perspektivischen Explosionsdarstellung ein zweiteiliges Zwischenklemmbrett mit einem Unterteil und einem damit verrastbaren Oberteil ohne Bestückung mit den zu kontaktierenden Bauteilen;
- FIG 2: das gegenüber der Darstellung in FIG 1 derart gedrehte Oberteil, dass die Vormontage- bzw. Vorfixierungs-aufnahmen für die einzulegenden Kontaktierungsbauteile ersichtlich sind;
- FIG 3: eine Draufsicht auf ein mit sämtlichen Kontaktierungsbauteilen vormontiertes Oberteil;
- FIG 4: die Gesamtdraufsicht auf ein geschlossenes, mit sämtlichen Kontaktierungsbauteilen bestücktes Zwischenklemmbrett;
- FIG 5: eine Draufsicht auf ein lediglich mit einer als Zwischenleitung weiterführenden durchgehenden äußeren Motor-Anschlussleitung vormontiertes Oberteil;
- FIG 6: die Seitenansicht eines an einem Motorgehäuseteil verrasteten und dabei einen abisolierten äußeren Kontaktierungsbereich einer Motor-Anschlussleitung als Massenanschluss kontaktierenden Zwischenklemmbretts;
- FIG 7: die axiale Draufsicht auf einen Lüftermotor mit einem in bekannter Weise am Lagerbügel eines Elektromotors gehaltenen Zwischenklemmbrett;
- FIG 8: in vergrößerter Draufsicht das mit sämtlichen Kontaktierungsbauteilen bestückte Zwischenklemmbrett aus FIG 5;
- FIG 9: in einer axialen Draufsicht das Zwischenklemmbrett gemäß FIG 6.

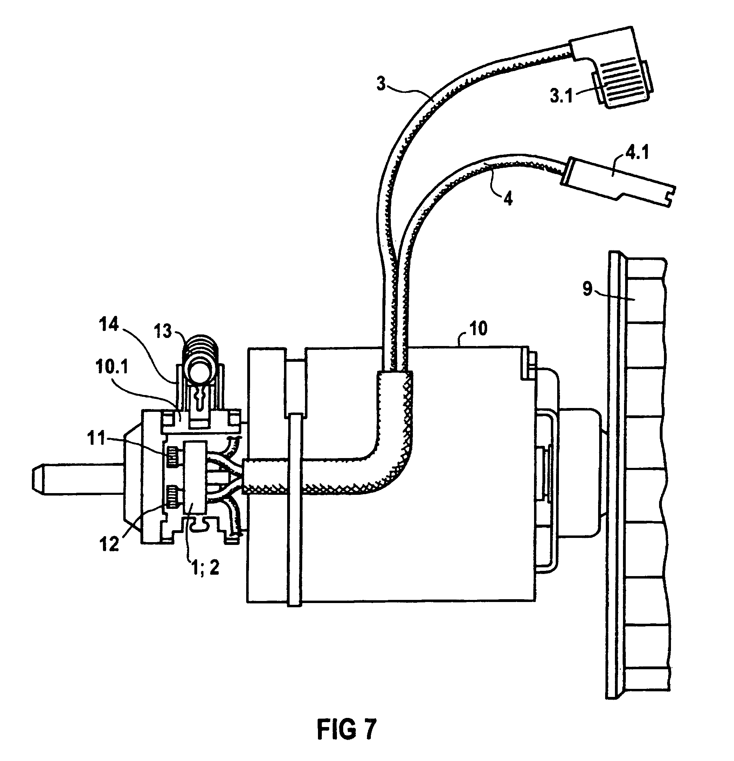

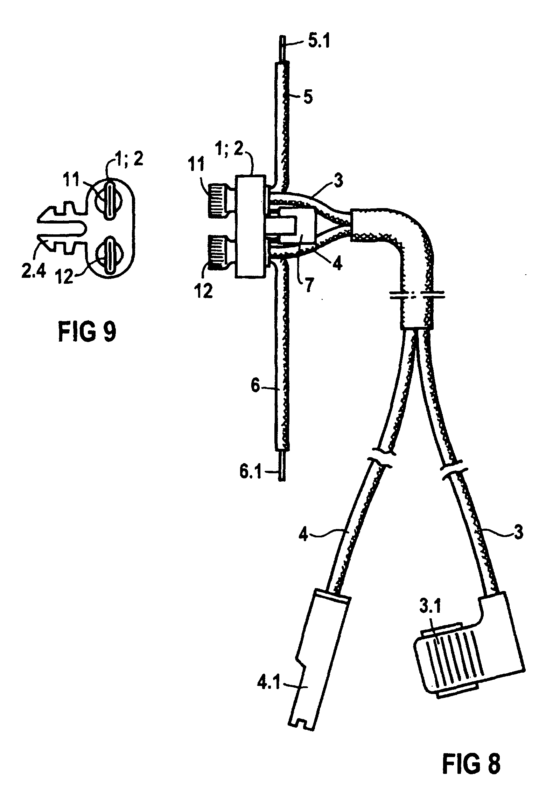

FIG 7 zeigt in einer axialen Draufsicht einen z.B. aus der DE 34 34 429 C2 bzw. der EP 0 708 519 B1 bekannten Elektromotor 10, mit einem auf dem rechten Rotorwellenende befestigten Lüfterrad 9. Im Bereich eines linken Lagerbügels 10.1 ist einer von zwei Hammerbürstenhaltern 14 mit einer Entstördrossel 13 angedeutet, der einen hier nicht ersichtlichen Kommutator zur Speisung der Rotorwicklung des Elektromotors 10 beschleift. Die Stromzuführung zu dem Kommutator erfolgt über äußere Motor-Anschlussleitungen 3;4 mit äußeren Motor-Anschlusssteckern 3.1;4.1 zu einem an dem Lagerbügel 10.1 befestigten Zwischenklemmbrett 1;2, von dem zur Speisung der Hammerbürstenhalter bzw. der Bürsten gemäß FIG 8 Zwischenleitungen 5;6 abgehen, deren abisolierte freien Enden 5.1;6.1 mit den zu den Bürsten führenden Entstördrosseln verlötet sind; wie insbesondere aus den Detailzeichnungen gemäß FIG 8,9 ersichtlich, sind zur Kontaktierung der äußeren Motor-Anschlussleitungen 3;4 mit den Zwischenleitungen 5;6 und einem Funkentstörbauteil 7 in Form eines Kondensators Aderendhülsen 11;12 in dem Zwischenstecker 1;2 gehaltert, in welche die miteinander zu kontaktierenden abisolierten bzw. freien Anschlussenden der vorgenannten Bauteile eingesteckt und durch Verquetschen der Aderendhülsen 11;12 untereinander kontaktiert und am Zwischenklemmbrett 1;2 fixiert sind. Das Zwischenklemmbrett 1;2 ist über eine schwenk- und einsteckbare Rastverbindung 2.4 im Sinne auch einer Zugentlastung der kontaktierten Leitungen an dem Lagerbügel 10.1 des Elektromotors 10 fixierbar.

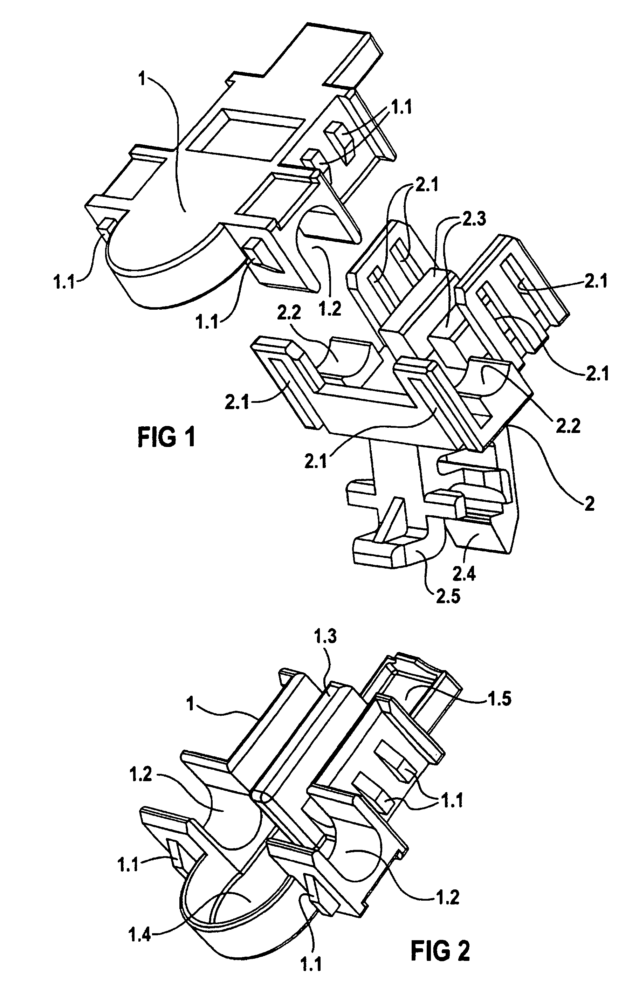

FIG 1-5 dienen zur Erläuterung des erfindungsgemäßen Zwischenklemmbrettes 1;2 mit seiner vorteilhaften Kontaktierung und zugentlasteten Fixierung von äußeren Motor-Anschlussleitungen 3;4 und inneren Zwischenleitungen 5;6 und zumindest einem Funkentstörbauteil 7 in Form eines Kondensators und gegebenenfalls eines Motorschutzbauteiles 8 in Form eines Varistors. Dazu sind die freien Anschlussenden des elektrischen Funkentstörbauteils 7 bzw. des Motorschutzbauteiles 8 in einem inneren Kontaktierungsbereich 3.2 bzw.4.2 der äußeren Motor-Anschlussleitungen 3;4 durch Andrücken an die zumindest in diesem Bereich isolationsfreien äußeren Motor-Anschlussleitungen 3;4 bzw. Zwischenleitungen 5;6 durch das Zwischenklemmbrett 1;2 angedrückt.

In vorteilhafter Weise sind die äußeren Anschlussleitungen 3;4 und die weiterführenden Zwischenleitungen 5;6 jeweils Teile einer durchgehenden einstückigen Motor-Anschlussleitung 3;4 bzw. Zwischenleitung 5;6, die nur im Kontaktierungsbereich der äußeren Anschlussstecker 3.1 bzw.4.1 abisoliert ist.

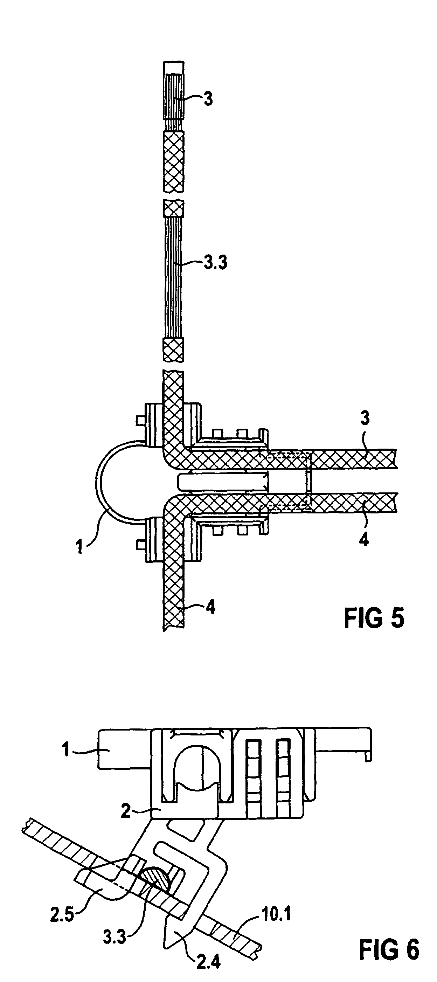

Bei einem Verzicht auf anzuschließende Funkentstörbauteile bzw. Motorschutzbauteile dient in vorteilhafter Weise das Zwischenklemmbrett 1;2 gemäß FIG 5 lediglich als Zugentlastung für die zwischen den beiden Zwischenklemmbrett-Teilen 1 bzw.2 einklemmbaren durchgehenden Motor-Anschlussleitungen 3;4.

Zur einfachen Kontaktierung und anschliessenden sicheren Fixierung der miteinander elektrisch zu verbindenden Bauteile sowie zur Zugentlastung der in das Zwischenklemmbrett 1;2 führenden Anschlussleitungen besteht das Zwischenklemmbrett 1;2 aus zwei Zwischenklemmbrett-Teilen 1 bzw.2, die nach der Bestückung mit den zugentlastet zu fixierenden und gegenseitig zu kontaktierenden Bauteilen mit deren Klemmfixierung und Zugentlastungsicherung zu einer Bauteileinheit miteinander verbindbar, insbesondere miteinander verrastbar sind.

Wie insbesondere aus den perspektivischen Explosionsdarstellungen gemäß FIG 1,2 ersichtlich, ist nach einer weiteren Ausgestaltung der Erfindung das eine Zwischenklemmbrett-Teil 1 im Sinne einer Vormontage- bzw. Vorfixierungsaufnahme mit durch eine Isolierwand 1.3 getrennten Aufnahmekammern für die von außen zugeführten Motor-Anschlussleitungen 3;4 und mit Aufnahmeauflagen 1.2 für die anschliessend abgewinkelt abgehenden Zwischenleitungen 5;6 sowie mit einer Aufnahmekammer 1.4 für ein Motorschutzbauteil 8 in Form eines Varistors sowie einer Aufnahmekammer 1.5 für ein Funkentstörbauteil 7 in Form eines Kondensators versehen.

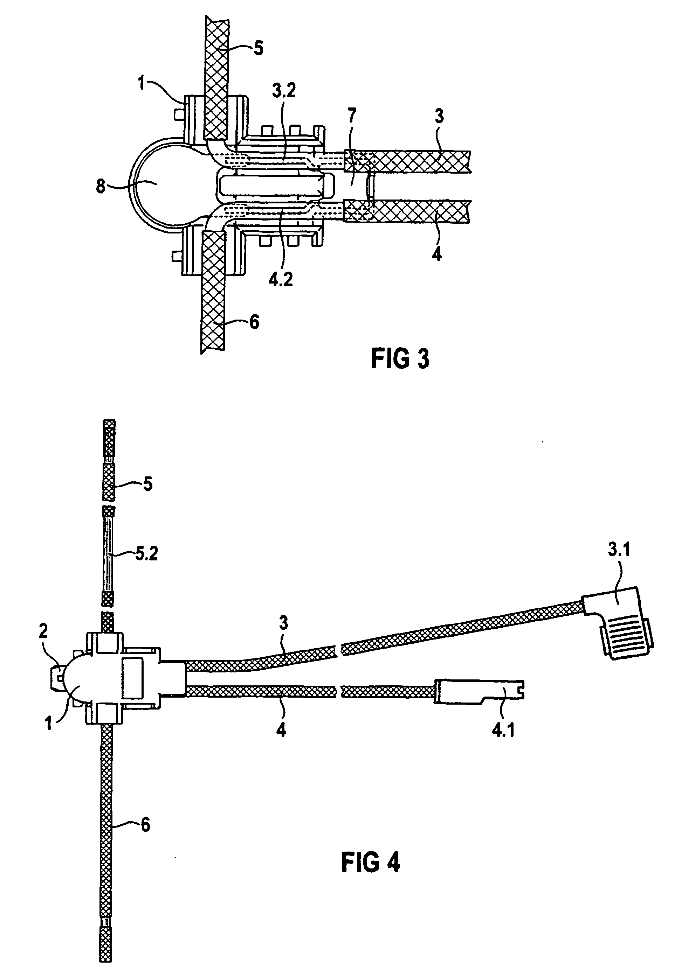

Nach dem Einlegen der vorgenannten, miteinander zu kontaktierenden Bauteile in die entsprechenden Aufnahmen des ersten Zwischenklemmbrett-Teils 1 gemäß FIG 3 wird das zweite Zwischenklemmbrett-Teil 2 auf das erste Zwischenklemmbrett 1 aufgesteckt und an diesem fixiert. Zur gegenseitigen Fixierung dienen Fixierungsvorsprünge 1.1 mit Anlaufschrägen am ersten Zwischenklemmbrett 1, die in entsprechende Rastaufnahmen 2.1 des zweiten Zwischenklemmbretts 2 einrasten. Zur zugentlastenden Klemmfixierung bzw. zur zusätzlichen elektrischen Kontaktierung zwischen den Motor-Anschlussleitungen bzw. den Zwischenleitungen und dem Funkentstörbauteil bzw. Motorschutzbauteil und zur Fixierung der Kontaktierungsbereiche in dem Zwischenklemmbrett 1;2 kommen vorstehende Anlagestege 2.3 des zweiten Zwischenklemmbretts 2 zur Anlage auf die miteinander zusammengeführten Anschlussenden beiderseits der Zwischenwand 1.3 im Kontaktierungsbereich des ersten Zwischenklemmbrett-Teils 1 und drücken im verrasteten Zustand die einzelnen Kontaktierungsbereiche im Sinne einer sicheren gegenseitigen Kontaktierung und zugentlasteten Fixierung fest zusammen. In ähnlicher Weise dienen Andruckauflagen 2.2 zum Andruck der Zwischenleitungen 5;6 an ihre korrespondierenden Aufnahmen 1.2 im ersten Zwischenklemmbrett-Teil 1.

Nach der derartigen Vormontage bzw. Vorfixierung sämtlicher zu kontaktierenden Bauteile in dem ersten Zwischenklemmbrett-Teil 1 und ihrer Fixierung durch das gegengedrückte und durch die Rastaufnahmen fixierte zweite Zwischenklemmbrett-Teil 2 wird die gesamte Bauteileinheit mittels einer Rastverbindung 2.4 mit einer Schwenk-Abstützauflage 2.5 an dem Elektromotor 10 bzw. dem Lagerbügel 10.1 des Elektromotors fixiert; dabei wird in aus der EP 0 708 519 B1 bekannter Weise die Massepotential führende Motor-Anschlussleitung 3 bzw. Zwischenleitung 5 mit einem außerhalb des Zwischenklemmbretts 1;2 vorgesehenen abisolierten äußeren Masseanschluss-Kontaktierungsbereich 3.3 bzw. 5.2 nach entsprechendem Rückbiegen in eine halboffene Leitungsaufnahme 2.6 des Zwischenklemmbrett-Teils 2 eingelegt und in dessen Rastendstellung gegen ein elektrisch leitendes Motorgehäuseteil in Form des Lagerbügels 10.1 als Masseanschluss gegengedrückt.

FIG 4 zeigt in einer Draufsicht abschliessend eine gesamte fertigmontierte und zusammengebaute Anschlusseinheit.

## Patentansprüche

1. Elektromotor, insbesondere Kommutatormotor,
- mit einem an einem Motorteil befestigbaren Zwischenklemmbrett (1;2) zur zugentlastenden Fixierung von äußeren Motor-Anschlussleitungen (3;4), die als Zwischenleitungen (5;6) zu Anschlüssen des Elektromotors (10) weiterführen;
- mit einer Ausbildung des Zwischenklemmbrettes (1;2) aus zwei unter Einschluss der zuvor einlegbaren Motor-Anschlussleitungen (3;4) bzw. Zwischenleitungen (5;6) im Sinne einer zugentlastenden Fixierung zusammendrückbaren und derart gegenseitig fixierbaren Zwischenklemmbrett-Teilen (1 bzw.2);
- mit einer Ausbildung des Zwischenklemmbrettes (1;2) zur zusätzlichen gegenseitigen Kontaktierung der äußeren Motor-Anschlussleitungen (3;4) bzw. Zwischenleitungen (5;6) mit zumindest einem elektrischen Funkentstörbauteil (7);
- mit einer Benutzung des Zwischenklemmbrettes (1;2) als löt- bzw. vercrimpfreies Klemm-Kontaktierungsmittel zwischen gegenseitigen inneren Kontaktierungsbereichen (3.2;4.2) der äußeren Motor-Anschlussleitungen (3;4) bzw. der Zwischenleitungen (5;6) mit dem elektrischen Funkentstörbauteil (7).

2. Elektromotor nach Anspruch 1
- mit einer Ausbildung der äußeren Motor-Anschlussleitungen (3;4) auch als Zwischenleitungen (5;6) in Form von jeweils durchgehenden isolierten, jedoch jeweils in ihrem Kontaktierungsbereich (3.2;4.2) innerhalb des Zwischenklemmbrettes (1;2) abisolierten Leitungen.

3. Elektromotor nach Anspruch 1 und/oder 2
- mit einem abisolierten äußeren Kontaktierungsbereich (3.3 bzw.5.2) im Verlauf einer der äußeren Motor-Anschlussleitungen (3;4) bzw. der Zwischenleitungen (5;6) nach ihrem Austritt aus dem Zwischenklemmbrett (1;2) zur Verbindung mit einem Masseanschluss, insbesondere einem elektrisch leitenden Teil des Elektromotors (10).

4. Elektromotor nach zumindest einem der Ansprüche 1-3
- mit einer Ausbildung eines der beiden Zwischenklemmbrett-Teile (1 bzw.2) im Sinne einer Vormontage- bzw. Vorfixierungsaufnahme zumindest der Kontaktierungsbereiche (3.2;4.2) der Motor-Anschlussleitungen (3;4) bzw. Zwischenleitungen (5;6).

5. Elektromotor nach zumindest einem der Ansprüche 1-4
- mit einer Ausbildung des zweiten Zwischenklemmbrett-Teils (2) im Sinne eines unter der Klemm-Kontaktierung mit dem ersten Zwischenklemmbrett-Teil (1) zusammensteckbaren, insbesondere verrastbaren, korrespondierenden Bauteil.

6. Elektromotor nach zumindest einem der Ansprüche 1-5
- mit einer Ausbildung des Zwischenklemmbretts (1;2) als Kunststoffteil, insbesondere als Kunststoff-Spritzgußteil.

7. Elektromotor nach zumindest einem der Ansprüche 1-6
- mit einer Halterung, insbesondere Rasthalterung (2.4), als Teil des Zwischenklemmbretts (1;2) zu dessen Fixierung an dem Elektromotor (10).

8. Elektromotor nach zumindest einem der Ansprüche 1-7
- mit einem Funkentstörbauteil (7) in Form zumindest eines Kondensators.

9. Elektromotor nach zumindest einem der Ansprüche 1-8
- mit einer zusätzlichen Klemm-Kontaktierung durch das Zwischenklemmbrett (1;2) für zumindest ein Motorschutzbauteil (8), insbesondere einen Varistor.

## Claims

1. Electric motor, in particular a commutator motor,
- with an intermediate terminal block (1;2) that can be attached to a motor element for fixing external motor connector leads (3; 4) in a strain-relieving manner, said leads continuing as intermediate leads (5; 6) to connections on the electric motor (10);
- with a configuration of the intermediate terminal block (1; 2) comprising two intermediate terminal block elements (1 or 2) that can be pushed together incorporating the motor connector leads (3; 4) or intermediate leads (5; 6) that can be inserted beforehand to form a strain-relieving fixing and can be mutually fixed in such a way;
- with a configuration of the intermediate terminal block (1; 2)for additional mutual contact between the external motor connector leads (3; 4) or intermediate leads (5; 6) and at least one electrical radio interference suppression component (7);
- using the intermediate terminal block (1; 2) as a solderless or crimp-free terminal contact element between mutual internal contact areas (3.2; 4.2) between the external motor connector leads (3; 4) or intermediate leads (5; 6) and the electrical radio interference suppression component (7).

2. Electric motor according to Claim 1,
- with a configuration of the external motor connector leads (3; 4) also as intermediate leads (5; 6) each in the form of continuous insulated leads, each of which is however stripped in its contact area (3.2; 4.2) within the intermediate terminal block (1; 2).

3. Electric motor according to Claim 1 and/or 2,
- with a stripped external contact area (3.3 or 5.2) along the course of one of the external motor connector leads (3; 4) or the intermediate leads (5; 6) after its exit from the intermediate terminal block (1; 2) for connection with an earth connection, in particular an electrically conductive part of the electric motor (10).

4. Electric motor according to at least one of Claims 1-3,
- with a configuration of one of the two intermediate terminal block elements (1 or 2) as a pre-assembly or pre-fixing recess of at least the contact areas (3.2; 4.2) of the motor connector leads (3; 4) or intermediate leads (5; 6).

5. Electric motor according to at least one of Claims 1-4,
- with a configuration of the second intermediate terminal block element (2) as a corresponding component that can establish a plug-type connection together with, in particular can be latched with, the first intermediate terminal block element (1) during terminal contact.

6. Electric motor according to at least one of Claims 1-5,
- with a configuration of the intermediate terminal block (1; 2) as a plastic part, in particular an injection-molded plastic part.

7. Electric motor according to at least one of Claims 1-6,
- with a support, in particular a latched support (2.4), as an element of the intermediate terminal block (1; 2) to fix said block to the electric motor (10).

8. Electric motor according to at least one of Claims 1-7,
- with a radio interference suppression component (7) in the form of at least one capacitor.

9. Electric motor according to at least one of Claims 1-8,
- with an additional terminal contact through the intermediate terminal block (1; 2) for at least one motor protection component (8), in particular a varistor.

## Revendications

1. Moteur électrique, notamment moteur à collecteur, comportant :
- une plaque de serrage intermédiaire (1;2) pouvant être fixée sur une partie de moteur et servant à fixer avec décharge de traction des conducteurs de raccordement de moteur extérieurs (3;4), qui mènent, en tant que conducteurs intermédiaires (5;6), à des prises de raccordement du moteur électrique (10);
- une réalisation de la plaque de serrage intermédiaire (1;2) en deux éléments (1 et 2) de plaque de serrage intermédiaire qui, pour renfermer les conducteurs de raccordement de moteur (3;4) et les conducteurs intermédiaires (5;6) préalablement placés à l'intérieur, peuvent être comprimés l'un contre l'autre pour former une fixation avec décharge de traction et être fixés ainsi mutuellement l'un sur l'autre.
- une réalisation de la plaque de serrage intermédiaire (1;2) permettant, en outre, de mettre respectivement en contact les conducteurs de raccordement de moteur extérieurs (3;4) et les conducteurs intermédiaires (5;6) avec au moins un élément d'antiparasitage électrique (7);
- une utilisation de la plaque de serrage intermédiaire (1;2) en tant que moyen servant à mettre mutuellement en contact par serrage, sans soudure ni crampon, les zones intérieures de mise en contact des conducteurs de raccordement de moteur extérieurs (3;4) et des conducteurs intermédiaires (5;6), d'une part, et l'élément d'antiparasitage électrique (7) d'autre part.

2. Moteur électrique selon la revendication 1 comportant :
- une réalisation des conducteurs de raccordement de moteur extérieurs (3;4) servant en même temps de conducteurs intermédiaires (5;6), sous la forme de conducteurs continus, isolés mais dénudés, chacun, au niveau d'une zone de mise en contact (3.2;4.2) situées à l'intérieur de la plaque de serrage intermédiaire (1;2).

3. Moteur électrique selon la revendication 1 et/ou 2 comportant :
- une zone de mise en contact extérieure dénudée (3.3 et 5.2) située sur l'un des conducteurs de raccordement de moteur extérieurs (3;4) et/ou des conducteurs intermédiaires (5;6) après que ceux-ci soient sortis de la plaque de serrage intermédiaire (1 ;2) et permettant de relier celui-ci à la masse, notamment à une partie électriquement conductrice du moteur électrique.

4. Moteur électrique selon au moins l'une des revendications 1 à 3 comprenant :
- une réalisation de l'un des deux éléments (1 et 2) de plaque de serrage intermédiaire respectivement en tant que logement de prémontage et/ou de préfixation au moins des zones de mise en contact (3.2;4.2) des conducteurs de raccordement de moteur (3;4) et des conducteurs intermédiaires (5;6).

5. Moteur électrique selon au moins l'une des revendications 1 à 4 comprenant :
- une réalisation du deuxième élément (2) de plaque de serrage intermédiaire en tant qu'élément correspondant pouvant être assemblé, notamment enclenché, par l'intermédiaire de la mise en contact par serrage, avec le premier élément de plaque de serrage intermédiaire (1).

6. Moteur électrique selon au moins l'une des revendications 1 à 5 comprenant :
- une réalisation de la plaque de serrage intermédiaire (1;2) en tant qu'élément en matière plastique, notamment en tant que pièce injectée en matière plastique.

7. Moteur électrique selon au moins l'une des revendications 1 à 6 comprenant :
- une fixation, notamment fixation par enclenchement (2.4), en tant qu'élément faisant partie de la plaque de serrage intermédiaire (1;2) servant à fixer celle-ci sur le moteur électrique (10).

8. Moteur électrique selon au moins l'une des revendications 1 à 7 comprenant :
- un élément d'antiparasitage (7) sous la forme d'au moins un condensateur.

9. Moteur électrique selon au moins l'une des revendications 1 à 8 comprenant :
- une mise en contact supplémentaire par serrage réalisée par la plaque de serrage intermédiaire (1;2) pour au moins un élément de protection de moteur (8), notamment une varistance.
